# EUROPEAN PATENT APPLICATION

(11) **EP 1 718 045 A1**
(43) Date of publication of application: **02.11.2006**
(21) Application number: 06005979.7
(22) Date of filing: 23.03.2006
(51) Int. Cl.: H04M 1/247, H04M 1/725, G10L 13/08, G06K 9/68, G10L 15/00, H04M 1/27

(54) **Method for setting main language in mobile terminal and mobile terminal implementing the same**

(30) Priority: 25.04.2005 KR 20050034001
(71) Applicant: Samsung Electronics Co., Ltd., Suwon-si, Gyeonggi-Do (KR)
(72) Inventor: Lee, Jong-Phil c/oSamsung Electronics Co., Ltd., Suwon-si, Gyeonggi-do (KR); Kang, Chang-Taek c/oSamsung Electronics Co., Ltd., Suwon-si, Gyeonggi-do (KR)
(74) Representative: Lang, Johannes

(57) **Abstract**

A method for setting a main language in a mobile terminal, and a mobile tenninal configured to implement the same, are provided, where at least one name of language available in the mobile terminal is displayed when a power key is pressed, and a language corresponding to a language name displayed is set as the main language when a setting key is pressed.

## Description

### BACKGROUND OF THE INVENTION

### Field of the Invention

The present invention relates to a mobile terminal. More particularly, the present invention relates to a method for setting the main language of a mobile terminal, and a mobile terminal implementing the same.

### Description of the Related Art

Generally, mobile terminals are classified into a GSM (Global System for Mobile communication) type and a CDMA (Code Division Multiple Access) type. GSM is a European cellular standard for asynchronous data transmission, whereas CDMA is an American standard for synchronous data transmission. These mobile telecommunication standards are commonly adopted in the world for mobile terminals and technologies. The GSM or CDMA based mobile terminals enable users to use telephony services at any place and any time.
In this globalized world, an increasing number of people move or travel overseas for various purposes or reasons. They often have language problems while living or staying in a foreign country using a different language. A common language problem occurs when they buy mobile terminals in a foreign country. Since the language of the country is set as a main language in mobile terminals sold in the country, travelers or immigrants with weak language skills may be inconvenienced when using the mobile terminals.

### SUMMARY OF THE INVENTION

Accordingly, the present invention has been made to address the above-mentioned problems occurring in the prior art, and objects of the present invention are to provide a method for setting a main language in a mobile terminal, and a mobile terminal having a capability for setting the main language thereof.

According to an exemplary embodiment of the present invention for accomplishing at least the above object, there is provided a method for setting the main language of a mobile terminal, comprising displaying at least one name of a language available in the mobile terminal when a power key is pressed, and setting a language corresponding to a language name displayed when a setting key is pressed as a main language.

According, to another exemplary embodiment of the present invention, there is provided a method for setting a main language in a mobile terminal comprising outputting at least one name of a language through an audio processor, and setting a language corresponding to a language name outputted when a setting key is pressed as a main language.

According to yet another exemplary embodiment of the present invention, there is provided a mobile terminal configured for setting the main language thereof where at least one name of a language available in the mobile terminal is displaying when a power key is pressed, and a language, corresponding to a language name displayed is set as a main language when a setting key is pressed.

According, to yet another exemplary embodiment of the present invention, there is provided a mobile terminal configured for setting a main language thereof where at least one name of a language is output through an audio processor, and a language corresponding to a language name outputted is set as a main language when a setting key is pressed.

### BRIEF DESCRIPTION OF THE DRAWINGS

The above and other objects, features and advantages of certain exemplary embodiments of the present invention will be more apparent from the following detailed description taken in conjunction with the accompanying drawings in which like reference numerals will be understood to refer to like parts, components and structures, where:
FIG. 1 is a block diagram of a mobile terminal according to an exemplary embodiment of the present invention;
FIG. 2 is a flow chart showing a process for setting a main language in a mobile terminal according to a first exemplary embodiment of the present invention;
FIG. 3 is a flow chart showing a process for setting a main language in a mobile terminal according to a second exemplary embodiment of the present invention;
FIG. 4 is a flow chart showing a process for setting a main language in a mobile terminal according to a third exemplary embodiment of the present invention;
FIG. 5 is a flow chart showing a process for setting a main language in a mobile terminal according to a fourth exemplary embodiment of the present invention;
FIGs. 6A through 6D illustrate displays of language names according to the first exemplary embodiment of the present invention;
FIGs. 7A through 7E illustrate displays showing a main language to be set according to the third exemplary embodiment of the present invention; and
FIGs. 8A through 8D illustrate displays showing a main language to be set according to the fourth exemplary embodiment of the present invention.

### DETAILED DESCRIPTION OF EXEMPLARY EMBODIMENT

Hereinafter, exemplary embodiments of the present invention will be described with reference to the accompanying drawings. In the following description of the present invention, a detailed description of known functions and configurations incorporated herein will be omitted for conciseness and clarity .

In the following description, the term "main language" means a language mainly used in a mobile terminal to display a menu or text.

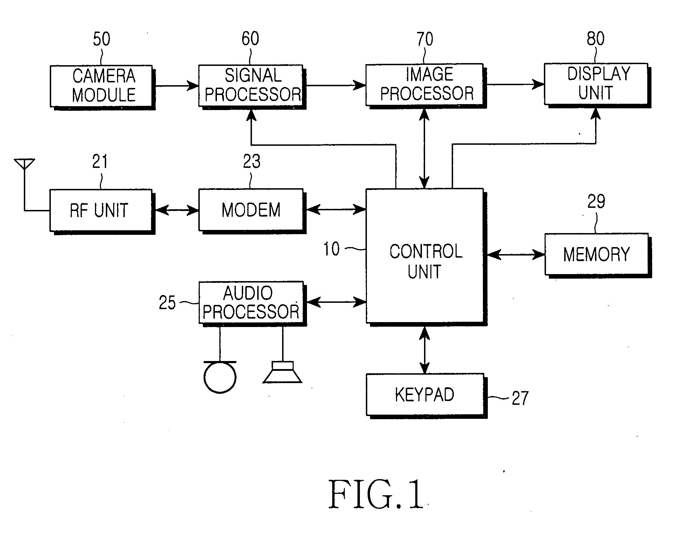

FIG. 1 is a block diagram of a mobile terminal according to an exemplary embodiment of the present invention. The mobile terminal may, for example, be a mobile phone.

Referring to FIG. 1, an RF unit 21 performs a wireless communication function in the mobile terminal. The RF unit 21 comprises an RF transmitter for performing upward conversion and amplification of the frequency of a transmitted signal and an RF receiver for amplifying a received signal with low noise and performing downward conversion of the frequency of the signal.

A modem 23 comprises a transmitter for coding and modulating a signal which will be transmitted and a receiver for demodulating and decoding a received signal.

An audio processor 25 may include a codec consisting of a data codec for processing packet data and an audio codec for processing an audio signal such as a speech signal. The audio processor 25 converts a digital audio signal received by the modem 23 into an analog signal and reproduce the analog signal through the audio codec. Also, the audio processor 25 converts an analog audio signal generated from a microphone into a digital audio signal through the audio codec and transfers the digital audio signal to the modem 23. The codec can be provided as an independent element or included in a control unit 10. When the a main language setting key is inputted through voice according to a preferred embodiment of the present invention, the audio processor 25 transfers a voice inputted through the microphone to the control unit 10.

A keypad 27 is provided with alphanumeric keys for inputting characters or number and function keys for setting various functions. The keypad 27 may also include a setting key, a voice-based main language setting key and an image-based main language setting key.

A memory 29 may be composed of a program memory and a data memory. The program memory stores programs for controlling general operations of the mobile terminal. Also, the program memory stores programs necessary to set a main language according to the present invention and those necessary to recognize photographed character images and convert the images into character data. The data memory temporarily stores data generated during implementation of the above programs. The data memory also stores data concerning different kinds of languages in the world according to an exemplary implementation of the present invention.

The control unit 10 controls the overall operations of the mobile terminal. The control section 10 may include the modem 23 and the codec. When a power key is pressed, the control unit 10 sequentially displays or outputs through a display unit or the audio processor at least one language name. When a setting key is subsequently pressed, the control unit 10 then sets the language currently displayed or outputted through the audio processor as a main language which will be used in the mobile terminal. When the user presses the voice-based main language setting key, the control unit 10 recognizes a voice inputted in a voice recognition mode and determines a language corresponding to the inputted voice. The control unit 10 displays the name of the determined language and sets this language as the main language. On the other hand, when the user presses the image-based main language setting key, the control unit 10 controls a camera module 50 to photograph while in a camera mode and analyzes text from a photographed image. Upon determination of a language in the text, the control unit 10 displays the corresponding language name. When the setting key is pressed, the control unit 10 then sets the named language as a main language.

The camera module 50 is used to photograph an object. The camera module 50 comprises a camera sensor for converting a photographed optical signal into an electrical signal. The camera sensor can be a charge coupled device (CCD) sensor. According to an exemplary implementation of the present invention, the camera module 50 may take an image of text.

A signal processor 60 converts an analog image signal outputted from the camera module 50 into an image signal. The signal processor 60 can be a digital signal processor (DSP).

An image processor 70 generates picture data for displaying an image signal outputted from the signal processor 60. The image processor 70 adjusts image signals received under the control of the control unit 10 to conform to the features, such as size and resolution, which are displayable on a display unit 80, and outputs the adjusted image data. The image processor 70 compresses the image data or restores the compressed image data to the original image data. In addition, the image processor 70 transmits a start address value of the image data outputted to the display unit 80, or changes the start address value and sends the changed value under the control of the control unit 10.

The display unit 80 displays image data outputted from the image processor 70. The display unit 80 can be an LCD comprising an LCD controller, a memory for storing image data and an LCD device. When the LCD is a touch screen, it can serve as an input section together with the keypad 27. The display unit 80 includes an image data display for outputting image data.

Referring to FIG. 1, if a user sets an outgoing call mode after dialing by using the keypad 27, the control unit 10 will detect the mode and will process the dialed information received through the modem 23. The control unit 10 converts the dialed information into an RF signal through the RF unit 21 and outputs the RF signal. A reply signal generated from a recipient is detected by the RF unit 21 and the modem 23. The audio processor 25 then forms a voice communication path so that the user can communicate with the recipient. When detecting an incoming call, the control unit 10 controls the audio processor 25 to generate a ringing signal. When the user replies to the incoming call, the control unit 10 detects the reply and controls the audio processor 25 to form a voice communication path so that the user can receive the incoming call. Although voice communications in the incoming or outgoing call mode have been described, the control unit 10 can also perform data communications to receive or transmit packet data or image data. In a standby mode or a messaging mode, the control unit 10 displays text data processed by the modem 23 on the display unit 80.

Hereinafter, the operations of an exemplary implementation of a mobile terminal for setting a main language according to an embodiment of the present invention will be explained in detail. When the user presses the power key on the keypad 27, the control unit 10 controls the memory 29 and the display unit 280 to sequentially display a plurality of names of languages previously stored. When the user presses the setting key on the keypad 27, the control unit 10 controls the memory 29 to set the language corresponding to the language name currently displayed as a main language.

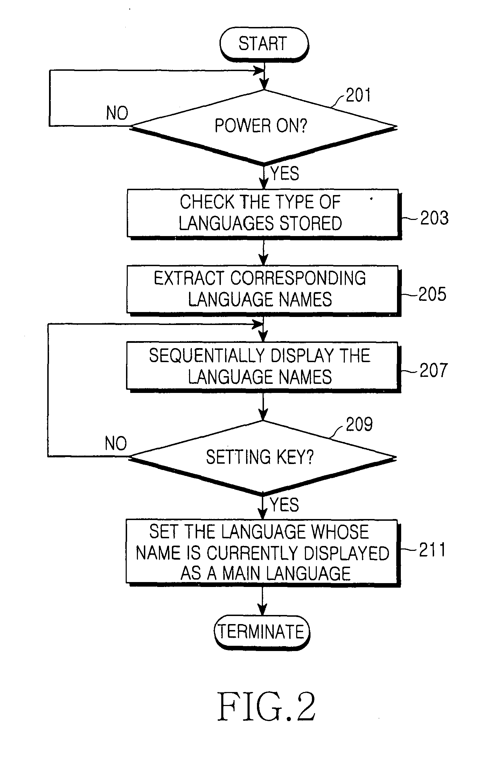

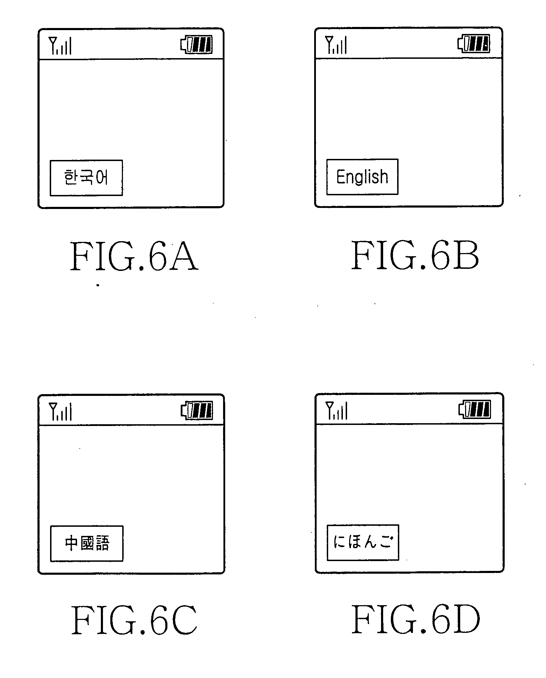

FIG. 2 is a flow chart showing a process for setting a main language according to a first exemplary embodiment of the present invention. FIGs. 6A through 6D illustrates displays of language names according to the first exemplary embodiment of the present invention.

Referring to FIGs. 2 and 6A through 6D, when the user presses the power key on the keypad 27, the control unit 10 detects the key pressing in step 201 and powers on the mobile terminal. After booting up the mobile terminal, the control unit 10 controls the memory 29 in step 203 to check the type of languages stored, which are various languages used in different countries and supported in the mobile terminal. The control unit 10 extracts languages names corresponding respectively to the type of languages stored, in step 205 and controls the memory 29 and the display unit 80 to sequentially display the extracted language names in step 207.

Supposing that the supported languages are Korean, English, Chinese and Japanese, the control unit 10 boots up the mobile terminal when powered on and then displays the language names " 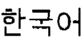 " (FIG. 6A), "English" (FIG. 6B), " 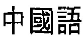 " (FIG. 6C) and " 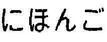 " (FIG. 6D) sequentially one after another. To be specific, each language name is displayed for a certain period of time and then another one is displayed.

When the user presses the setting key on the keypad 27, the control unit 10 detects the key pressing in step 209 and controls the memory 29 in step 211 to set the language whose name is displayed on the display unit 80 at the time of the pressing of the setting key as a main language. For example, if the user presses the setting key while the language name " 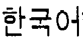 " is being displayed on the display unit 80, the control unit 10 will set Korean as the main language. Similarly, if the user presses the setting key during the display of "English," the control unit 10 will set English as the main language. If the user presses the setting key during the display of the language name " 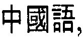 " the control unit 10 will set Chinese as the main language. If the user presses the setting key during the display of the language name " 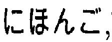 " the control unit 10 will set Japanese as the main language.

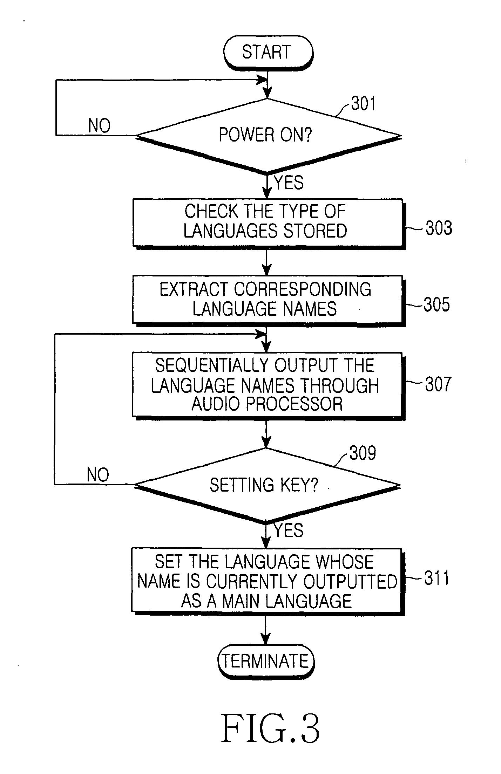

FIG. 3 is a flow chart showing a process for setting a main language in a mobile terminal by selecting a language name outputted through the audio processor according to a second exemplary embodiment of the present invention. Referring to FIG. 3, when the user presses the power key on the keypad 27, the control unit 10 detects the key pressing in step 301 and powers on the mobile terminal. After booting up the mobile terminal, the control unit 10 controls the memory 29 in step 303 to check the type of languages stored, which are various languages used in different countries and supported in the mobile terminal. The control unit 10 extracts languages names corresponding respectively to the type of languages stored, in step 305 and controls the memory 29 and the audio processor 25 to sequentially output the extracted language names in step 307. Supposing that the supported languages are Korean, English, Chinese and Japanese, the control unit 10 boots up the mobile terminal when powered on and then outputs the language names " 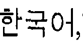 " "English," " 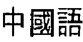 " and " 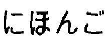 " in the respective languages sequentially one after another. To be specific, each language name is outputted for a certain period of time and then another one is outputted.

Subsequently, when the user presses the setting key on the keypad 27, the control unit 10 detects the key pressing in step 309 and controls the memory 29 in step 311 to set the language whose name is outputted at the time of the pressing of the setting key as a main language. For example, if the user presses the setting key while the language name " 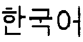 " is being outputted through the audio processor 25, the control unit 10 will set Korean as the main language. Similarly, if the user presses the setting key during the output of the language name "English," the control unit 10 will set English as the main language. If the user presses the setting key during the output of the language name " 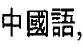 " the control unit 10 will set Chinese as the main language. If the user presses the setting key during the output of the language name " 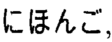 " the control unit 10 will set Japanese as the main language.

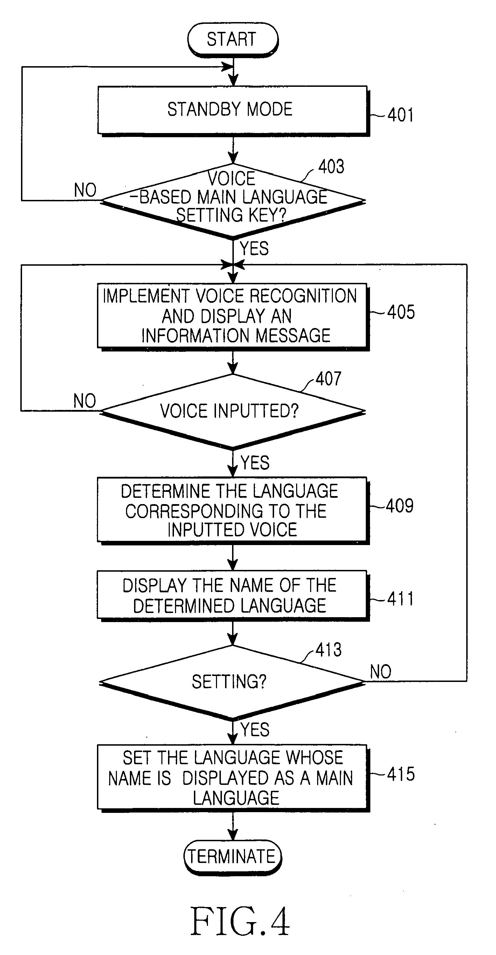

FIG. 4 is a flow chart showing a process for setting a main language in a mobile terminal according to a third exemplary embodiment of the present invention.

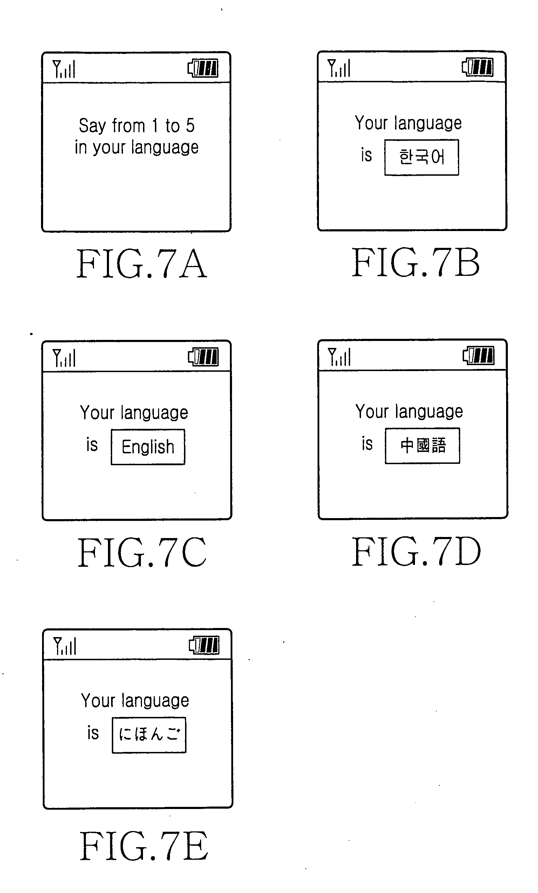

FIGs. 7A through 7E illustrates displays showing a main language to be set according to the third exemplary embodiment of the present invention.

Referring to FIGs. 4 and 7A through 7E, the process for setting a main language through voice recognition will be explained. In the standby mode of step 401, the user can press the voice-based main language setting key. The control unit 10 detects the key pressing in step 403 and then controls the memory 29 and the display unit 80 to enter the voice recognition mode and display a text message informing the user of the implementation of the voice recognition mode as illustrated in FIG. 7A in step 405. At this time, a corresponding voice message may be outputted concurrently with the display of the text information message. Also, an image, such as an avatar, may be used in the information message. Although the information message in FIG. 7A reads "*Say the numbers from 1 to 5 in your language*," any other message commanding the user to say a specific word or sentence can be displayed.

When the user inputs voice in response to the information message, the audio processor 25 transfers a voice signal to the control unit 10. The control unit 10 detects the transferred voice signal in step 407 and controls the memory 29 to convert the voice signal into voice data and determine the language corresponding to the inputted voice in step 409. Subsequently, the control unit 10 displays the name of the determined language in step 411. If the determined language is Korean, the control unit 10 will display the language name " 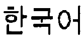 " as illustrated in FIG. 7B. Similarly, if the determined language is English, the control unit 10 will display the language name "English" as illustrated in FIG. 7C. If the determined language is Chinese, the control unit 10 will display the language name " 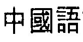 " as illustrated in FIG. 7D. If the determined language is Japanese, the control unit 10 will display the language name " 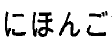 " as illustrated in FIG. 7E.

Subsequently, when the user presses the setting key on the keypad 27, the control unit 10 detects the key pressing in step 413 and controls the memory 29 in step 415 to set the language whose name is displayed as a main language. If the displayed language name is not of the language corresponding to the inputted voice, the user can then press a cancel key on the keypad 27 in order to repeat the voice recognition process for language determination.

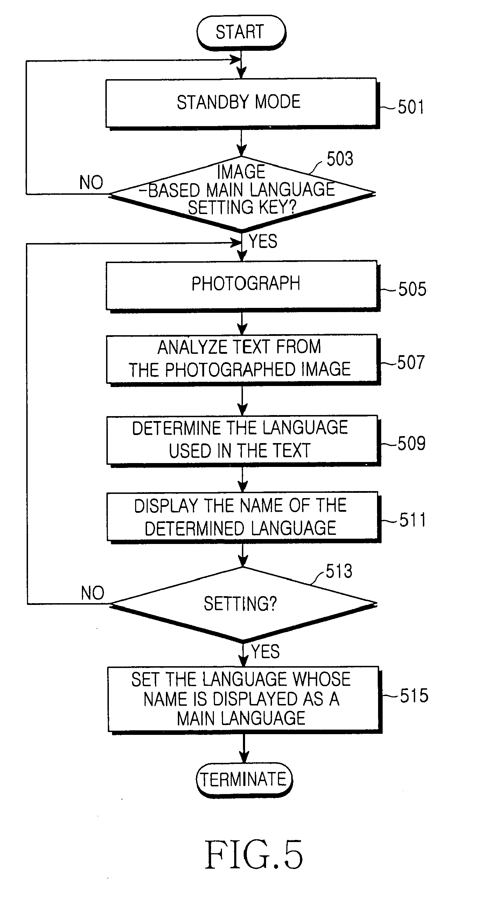

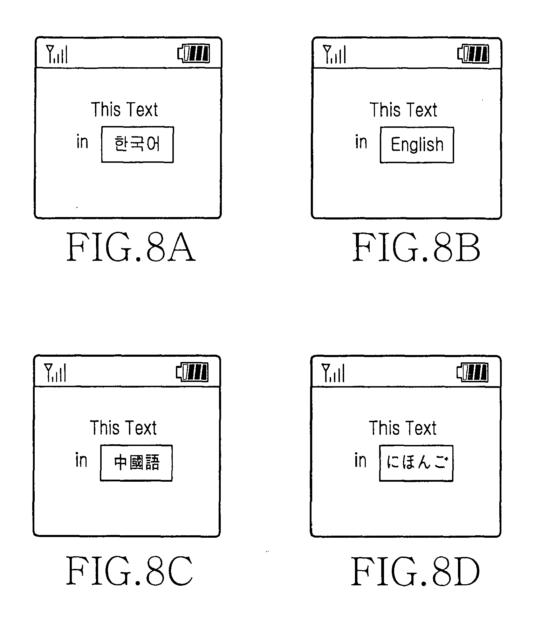

FIG. 5 is a flow chart showing a process for setting a main language in a mobile terminal according to a fourth exemplary embodiment of the present invention. FIGs. 8A through 8D illustrate displays showing a main language to be set according to the fourth exemplary embodiment of the present invention.

Referring to FIGs. 5 and 8A through 8D, the process for setting a main language through image recognition will be explained. In the standby mode of step 501, the user can press the image-based main language setting key. The control unit 10 detects the key pressing in step 503 and enters the camera mode in step 505. When a photograph key is pressed in the camera mode, the control unit 10 controls the camera module 50, signal processor 60 and image processor 70 to photograph an object. The object can be a paper written in a specific language. In step 507, the control unit 10 controls the memory 29 to extract a text image from a photographed image and converts the text image into text data. This conversion is supported by both hardware spec and software spec. The hardware spec supports the fine focus adjustment for an image photographed and secures a display speed of at least 12 fps and a maximum screen size for determining the optimum focus during the focus adjustment. Also, the hardware spec includes a lens ensuring a high picture quality for the recognition of characters. The software spec corrects spherical distortion of a camera image which occurs due to a pin hole lens and focus discrepancy caused by a close-up photograph. The software spec determines a character size and focus adjustment suitable for the recognition of characters, compensates for any image distortion caused by projection onto the nonvertical image plane and enables binarization of text photographed under a complex illumination condition. In addition, the software spec sets an engine recognizing light characters to be smaller than a data amount (for example, 5 Mbytes) and ensures a minimum character recognition rate (for example, 80% recognition per character).

After analyzing the text data in step 507, the control unit 10 controls the memory 29 to determine the language used in the text in step 509. Subsequently, the control unit 10 displays the name of the determined language in step 511. If the language used in the text is Korean, the control unit 10 will display the language name " 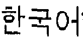 " as illustrated in FIG. 8A. Similarly, if the language used in the text is English, the control unit 10 will display the language name "English" as illustrated in FIG. 8B. If the language used in the text is Chinese, the control unit 10 will display the language name " 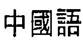 " as illustrated in FIG. 8C. If the language used in the text is Japanese, the control unit 10 will display the language name " 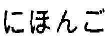 " as illustrated in FIG. 8D.

Subsequently, when the user presses the setting key on the keypad 27, the control unit 10 detects the key pressing in step 513 and controls the memory 29 in step 515 to set the language whose name is displayed as a main language. If the displayed language name is not of the language used in the photographed text, the user can then press a cancel key on the keypad 27 in order to repeat the image recognition process for language determination.

In accordance with certain exemplary embodiments of the present invention, it is possible to set a user's native language as a main language in the mobile terminal without entering a menu, which enhances user convenience.

As explained above, according the exemplary implementations of the present invention, users can set a main language after booting up a mobile terminal. The main language setting process can be done thereafter through a menu. Although sequential display or output of language names has been explained, the language names can be displayed or outputted simultaneously on one screen. Therefore, various modifications, additions and substitutions can be made without departing from the scope of the present invention. Accordingly, although exemplary embodiments of the present invention have been described for illustrative purposes, those skilled in the art will appreciate that various modifications, additions and substitutions are possible, without departing from the scope and spirit of the invention as defined in the appended claims and their equivalents.

## Claims

1. A method for setting a main language in a mobile terminal, said method comprising the steps of:
displaying at least one name of a language available in a mobile tenninal when the mobile tenninal is activated; and
setting a language corresponding to a language name displayed as the main language when the language name displayed is selected.

2. The method according to claim 1, wherein said displaying comprises sequentially displaying names of languages.

3. The method according to claim 1, wherein said setting comprises setting the language corresponding to the language name displayed as the main language when a setting key is pressed.

4. The method according to claim 1, wherein said displaying comprises:
checking different types of languages previously stored;
extracting language names corresponding to the type of languages stored; and
displaying the extracted language names in corresponding languages.

5. The method according to claim 1, wherein said different types of languages comprise various languages used in the world.

6. A method for setting a main language in a mobile terminal, said method comprising the steps of:
outputting at least one name of language through an audio processor; and
setting a language corresponding to a language name outputted as a main language when the language name outputted is selected.

7. The method according to claim 6, wherein said outputting comprises sequentially outputting names of languages.

8. The method according to claim 6, wherein said setting comprises setting the language corresponding to the language name outputted as the main language when a setting key is pressed.

9. The method according to claim 6, wherein said outputting comprises:
checking different types of languages previously stored;
extracting language names corresponding to the type of languages stored; and
outputting the extracted language names in corresponding languages through the audio processor.

10. A method for setting a main language in a mobile terminal, said method comprising the steps of:
recognizing voice inputted in a voice recognition mode when a voice-based main language setting key is pressed;
detennining a language corresponding to the recognized voice;
displaying a name of the determined language; and
setting the language corresponding to the name being displayed as a main language when the language corresponding to the name being displayed is selected.

11. The method according to claim 10, wherein said setting comprises setting the language cowesponding to the name being displayed as the main language when a setting key is pressed.

12. The method according to claim 10, wherein said recognizing comprises:
displaying a message informing a user of the implementation of the voice recognition mode; and
converting a voice signal inputted in response to the displayed message into voice data.

13. The method according to claim 10, further comprising the step of repeating voice recognition if the displayed language name is not of the language corresponding to the inputted voice.

14. The method according to claim 12, wherein said displaying of the message comprises displaying said message using at least one of text, audio, image and avatar.

15. A method for setting a main language in a mobile terminal, said method comprising the steps of:
photographing an object in a camera mode when an image-based main language option is selected;
analyzing text from a photographed image and determining a language used in the text;
displaying a name of the determined language; and
setting the language corresponding to the name being displayed as a main language when the language corresponding to the name being displayed is selected.

16. The method according to claim 15, wherein said setting comprises setting the language comprising the name being displayed as the main language when a setting key is pressed.

17. The method according to claim 15, wherein said analyzing and determining comprise:
extracting a text image from the photographed image; and
converting the extracted text image into text data.

18. The method according to claim 15, wherein said object comprises a paper comprising a writing in a specific language.

19. The method according to claim 15, further comprising the step of repeating image recognition if the displayed language name is not of the language used in the text.

20. A mobile terminal comprising:
an output unit for outputting at least one name of a language available in a mobile terminal when a mobile terminal is activated; and
a control unit setting a language corresponding to the at least one language name being output as a main language of the mobile terminal when the at least one language name is selected.

21. The mobile terminal according to claim 20, wherein said output unit is configured to facilitate sequentially outputting names of languages available in the mobile terminal.

22. The mobile terminal according to claim 20, wherein said output unit comprises a display unit for visually displaying the at least one name of the language available in the mobile terminal.

23. The mobile terminal according to claim 20, wherein said output unit comprises an audio processor for audibly outputting the at least one name of the language available in the mobile terminal.

24. The mobile terminal according to claim 20, further comprising a memory unit for storing at least two types of languages for the mobile tenninal,
wherein said control unit is configured to facilitate extracting of language names corresponding to the types of languages stored in said memory unit, and outputting of the extracted language names in corresponding languages.

25. The mobile terminal according to claim 20, wherein said output unit comprises an audio processor for audibly outputting the extracted language names in corresponding languages.

26. The mobile terminal of claim 20 further comprising:
an audio processor; and
a voice recognition module for recognizing a voice signal inputted in a voice recognition mode when a voice-based main language is selected;
wherein the control unit is configured to facilitate determining a language corresponding to the recognized voice,
the output unit outputs a name of the determined language; and
the language corresponding to the name being output is set as the main language of the terminal when the language corresponding to the name being output is selected.

27. The mobile terminal according to claim 26, wherein:
said control unit outputs a message informing a user of an activation of the voice recognition mode;
the voice signal is input in response to the message informing the user of the activation of the voice recognition mode; and
said voice recognition module converts the voice signal inputted in response to the output message into voice data.

28. The mobile terminal according to claim 20, further comprising:
a camera module for photographing an object when an image-based main language option is selected; and
an image processor for analyzing text from the photographed object and detemnining a language used in the text;
wherein the output unit outputs a name of the determined language; and
the control unit sets the language corresponding to the name being output as the main language of the mobile terminal when the name being output is selected.

29. The mobile terminal according to claim 28, wherein the image processor is configure to extract a text image from the photographed object, and to convert the extracted text image into text data.

30. The mobile terminal according to claim 28, wherein said photographed object comprises a paper comprising writing in the specific language.
